(19) Europäisches Patentamt
European Patent Office
Office européen des brevets

(11) Veröffentlichungsnummer: **0 335 215**
**A1**

## (12) EUROPÄISCHE PATENTANMELDUNG

(21) Anmeldenummer: 89104923.1

(22) Anmeldetag: 20.03.89

(51) Int. Cl.⁴: **G21C 3/34**

(30) Priorität: 31.03.88 DE 8804390 U

(43) Veröffentlichungstag der Anmeldung:
04.10.89 Patentblatt 89/40

(84) Benannte Vertragsstaaten:
**BE DE FR GB**

(71) Anmelder: **INTERATOM Gesellschaft mit beschränkter Haftung**
**Friedrich-Ebert-Strasse**
**D-5060 Bergisch-Gladbach 1(DE)**

(72) Erfinder: **Schneider, Wolfgang, Dipl.-Ing.**
**Luttersiefen 50**
**D-5253 Lindlar-Schmitzhöhe(DE)**
Erfinder: **Schmitz, Karl-Josef**
**Perdt 15**
**D-5250 Engelskirchen(DE)**

(74) Vertreter: **Mehl, Ernst, Dipl.-Ing. et al**
**Postfach 22 13 17**
**D-8000 München 22(DE)**

(54) **Abstandshaltegitter für ein Kernbrennstoffelement.**

(57) Abstandshaltegitter (1; 7; 10) mit polygonalen Stegen (3; 8; 13) und mit Anlagepunkten (4; 12) zu den Stäben (5) eines funkenerosiv hergestellten Kernbrennstoffelementes. Wesentlich ist, daß diese Gitter trotz funkenerosiver Herstellung erstmalig federnd und mit Untermaß ausgeführt sind. Durch entsprechende Bemaßung der Schlitze kann die Elastizität eingestellt werden.

FIG 1

EP 0 335 215 A1

Xerox Copy Centre

## Abstandshaltegitter für ein Kernbrennstoffelement

Die vorliegende Erfindung betrifft ein funkenerosiv hergestelltes Abstandshaltegitter mit polygonal, vorzugsweise hexagonal angeordneten Stegen mit Anlagepunkten zu den zahlreichen Stäben eines Kernbrennstoffelementes. Abstandshaltegitter dieser Art sind vorgesehen für Brenn-, Brut- oder Absorberstäbe, insbesondere für flüssigmetallgekühlte Kernreaktoren, und werden schon seit längerer Zeit nach dem Verfahren der Funkenerosion hergestellt, weil danach diese Teile mit geringen Wandstärken aber ohne mechanische Belastung und daher sehr maßgetreu hergestellt werden können.

In dem deutschen Patent 21 45 509.4 wird ein solches Abstandshaltegitter beschrieben, das neben einer sicheren Haltung der Brennstäbe durch geringen Materialaufwand und minimale Querschnittsverengung für das Kühlmittel sowohl den Neutronen- als auch den Kühlmittelfluß nur wenig beeinträchtigt und darüber hinaus einer rechnerischen Erfassung seiner Festigkeits- und Strömungseigenschaften zugänglich ist. Nach dem Funkenerosionsverfahren kann dieses Abstandshaltegitter sowohl wirtschaftlich als auch maßhaltig hergestellt werden. Gegenüber den früher aus zahlreichen Blechteilen hergestellten gelöteten oder geschweißten Abstandshaltegittern ist dieses bekannte Gitter aber starr und unelastisch, so daß es unter Berücksichtigung von Toleranzen und strahleninduzierten Stabaufweitungen mit einem notwendigen Spiel zwischen Anlagepunkten und Stab ausgestattet werden muß. Dieses Spiel kann aufgrund sogenannter Rattermarken bei längerem Betrieb zu Schäden an den dünnwandigen Brennstäben führen.

Auch in der deutschen Offenlegungsschrift 26 47 000.8 wird ein starres Abstandshaltegitter für Brennelemente beschrieben, das funkenerosiv hergestellt ist und zur Erleichterung der Montage im Bereich der Anlagepunkte mit schrägen Flächen versehen ist.

Aufgabe der vorliegenden Erfindung ist es, die genannten Nachteile zu vermeiden.

Zur Lösung dieser Aufgabe wird ein Abstandshaltegitter nach dem 1. Anspruch vorgeschlagen. Durch diese federnde Ausgestaltung der Anlagepunkte gegenüber dem Gitter kann jegliches Spiel zwischen Stäben und Anlagepunkten vermieden werden, wenn man den lichten Durchmesser innerhalb der Anlagepunkte eines Stabes kleiner macht als den Durchmesser des jeweiligen Brennstabs, so daß dieser mit einer berechenbaren Kraft von den Anlagepunkten gehalten wird. Damit lassen sich radiale Bewegungen zwischen Anlagepunkten und Stäben und damit auch Beschädigungen der Stäbe im Betrieb vermeiden.

In spezieller Ausgestaltung der Erfindung wird gemäß dem 2. Anspruch vorgeschlagen, daß in den Stegen beiderseits der Anlagepunkte achsparallele Schlitze vorhanden sind. Damit wird dieser Bereich von dem in sich sehr starren Sechseckverband entkoppelt, so daß er bei Belastung leichter nachgeben kann. Mit der Länge der Schlitze läßt sich auch das Maß der Elastizität einstellen.

In spezieller Ausgestaltung der Erfindung wird gemäß dem 3. Anspruch vorgeschlagen, das Material der Stege zwischen den Anlagepunkten jeweils dort, wo drei Stege zusammenstoßen, auf einem Teil der Gitterhöhe zu entfernen. Dieser Vorschlag ist eine konsequente Weiterentwicklung des vorhergehenden Anspruchs. Während vorher jeder einzelne Anlagepunkt von zwei schmalen Schlitzen umgeben war, werden jetzt zwei benachbarte Schlitze zu einem einzigen größeren Schlitz erweitert. Auf diese Weise wird noch mehr Elastizität erreicht und auch das Abstandshaltegitter im Ganzen weicher, das ja gerade an den Stellen, wo drei Stege zusammenstoßen, besonders starr ist.

In spezieller Ausgestaltung der Erfindung nach dem 4. Anspruch wird vorgeschlagen, daß das Material der Stege zwischen den Anlagepunkten jeweils bis zum oberen oder bis zum unteren Ende des Abstandshaltegitters entfernt ist. Auf diese Weise wird jeder Anlagepunkt nur noch von einer einseitig befestigten Zunge getragen, die gegenüber der zweiseitigen Befestigung wesentlich elastischer ist. Auch in diesem Fall gilt, daß das Abstandshaltegitter im Ganzen und über den Querschnitt betrachtet weicher wird.

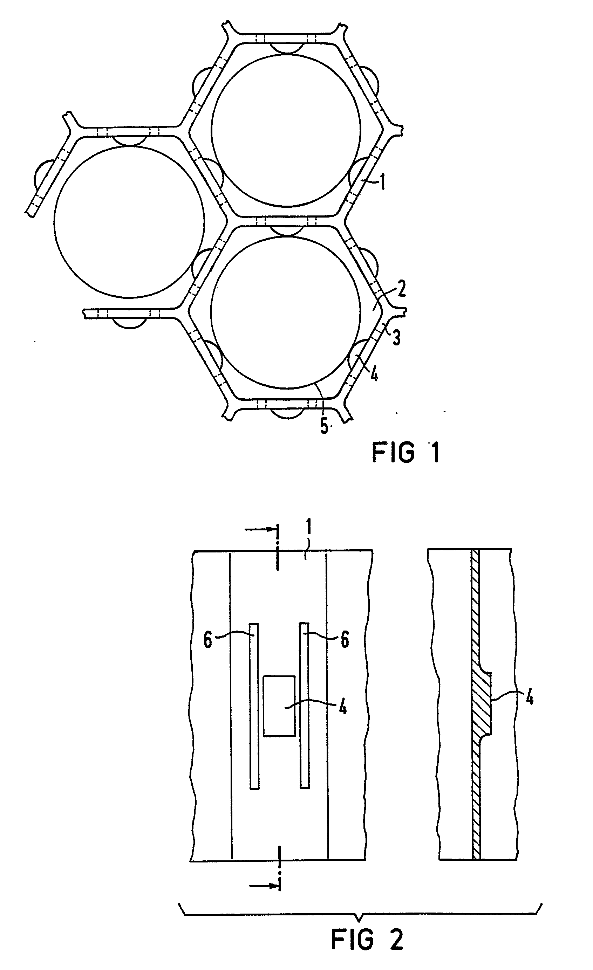

Die Figuren 1 bis 6 zeigen einige Ausführungsbeispiele der Erfindung.

In den Figuren 1 und 2 wird ein Ausschnitt eines sechseckigen Abstandshaltegitters 1 gezeigt, wobei jede einzelne Zelle 2 aus sechs geraden Stegen 3 gebildet wird und je drei abgerundete Anlagepunkte 4 zum Stab 5 enthält. In Figur 2 wird in der Seitenansicht dargestellt, wie ein Anlagepunkt 4 von zwei in bezug auf Stab- bzw. Brennelement achsparallelen Schlitzen 6 umgeben ist. Daraus ist ersichtlich, daß die Länge dieser Schlitze 6 für das Maß der Elastizität von Bedeutung ist.

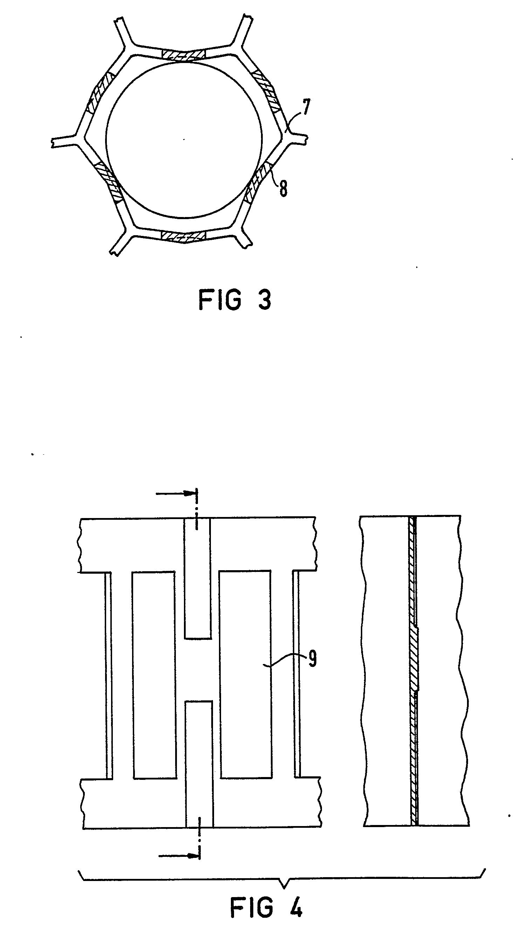

In den Figuren 3 und 4 wird ein Ausschnitt aus einem sechseckigen Abstandshaltegitter 7 dargestellt, bei dem die Stege 8 eines Sechsecks abwechselnd nach innen bzw. nach außen gebogen sind. Auf diese Weise kann man auf besondere erhabene Anlagepunkte verzichten. Die in Figur 2 bereits dargestellten Schlitze 6 beiderseits eines Anlagepunktes 4 sind in Figur 4 als Schlitz 9 soweit verbreitert, daß sie den Bereich zwischen drei Stegen 8 erfassen und daher das Abstandshaltegitter im Ganzen weicher gestalten.

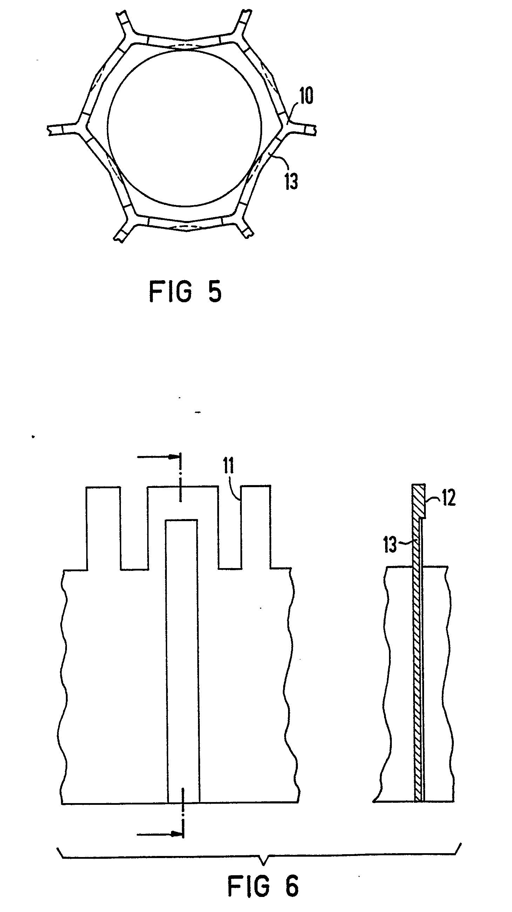

In den Figuren 5 und 6 ist ein Abstandshaltegitter 10 mit ebenfalls abwechselnd konkaven und konvexen Stegen 13 dargestellt, bei dem aber die Schlitze 11 beiderseits der Anlagepunkte 12 bis zum oberen Ende des Abstandshaltegitters reichen.

Die sogenannten Anlagepunkte sind bei genauer Betrachtung kleine Zylinderflächen mit einer Berührungslinie zum Stab. Die im Längsschnitt dargestellten Kanten werden in üblicher Weise durch Elektropolieren entgratet, so daß die Stäbe beim Einführen in das Gitter nicht beschädigt werden können.

## Ansprüche

1. Funkenerosiv hergestelltes Abstandshaltegitter mit polygonal, vorzugsweise hexagonal angeordneten Stegen mit Anlagepunkten zu den zahlreichen Stäben eines Kernbrennstoffelementes, **dadurch gekennzeichnet,** daß die Anlagepunkte (4; 12) zu den Stäben (5) mittels Schlitzen (6; 9; 11) federnd gestaltet sind und der von den Anlagepunkten (4; 12) eines Stabes (5) umschriebene Kreis ohne diesen Stab einen kleineren Durchmesser hat als der Stab.

2. Abstandshaltegitter nach Anspruch 1, **dadurch gekennzeichnet,** daß in den Stegen (3; 8; 13) beiderseits der Anlagepunkte (4; 12) achsparallele Schlitze (6; 9; 11) vorhanden sind.

3. Abstandshaltegitter nach Anspruch 1, **dadurch gekennzeichnet,** daß das Material der Stege (13) zwischen den Anlagepunkten (12) jeweils dort, wo drei Stege zusammenstoßen, auf einem Teil der Gitterhöhe entfernt ist.

4. Abstandshaltegitter nach Anspruch 3, **dadurch gekennzeichnet,** daß das Material der Stege (13) zwischen den Anlagepunkten (12) bis zum oberen oder unteren Ende des Abstandshaltegitters (10) entfernt ist.

8 P 6710 E

FIG 1

FIG 2

8 P 6710 E

FIG 3

FIG 4

8 P 6710 E

FIG 5

FIG 6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-2 477 755 (KWU)<br>* Seite 1, Zeilen 10-23; Seite 3, Zeilen 1-12; Figuren 1,2 *<br>--- | 1 | G 21 C 3/34 |
| A,D | DE-A-2 145 509 (INTERATOM)<br>* Seite 4, Zeilen 6-28; Figuren 1,2 *<br>--- | 1 | |
| A | FR-A-2 368 117 (KWU)<br>* Seite 8, Zeilen 12-37; Figuren 1-5 *<br>& DE-A-2 647 000 (Kat. D,A)<br>--- | 1 | |
| A | DE-A-2 001 327 (CEA)<br>* Seite 3, letzter Absatz - Seite 4, Absatz 1; Figuren 1,2 *<br>--- | 1 | |
| A | FR-A-2 571 171 (WESTINGHOUSE)<br>* Seite 7, Zeilen 12-22; Figuren 2,4 *<br>--- | 1,2 | |
| A | FR-A-2 377 077 (THE BABCOCK & WILCOX CO.)<br>* Seite 7, Zeile 13 - Seite 9, Zeile 10; Figuren 1-5 *<br>----- | 1,3,4 | |

**RECHERCHIERTE SACHGEBIETE (Int. Cl.4)**

G 21 C 3/00

Der vorliegende Recherchenbericht wurde für alle Patentansprüche erstellt

| Recherchenort | Abschlußdatum der Recherche | Prüfer |
|---|---|---|
| DEN HAAG | 28-06-1989 | JANDL F. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
.................................................................
& : Mitglied der gleichen Patentfamilie, übereinstimmendes Dokument

EPO FORM 1503 03.82 (P0403)